# EUROPÄISCHE PATENTSCHRIFT

(11) **EP 3 478 387 B1**
(45) Veröffentlichungstag und Bekanntmachung des Hinweises auf die Patenterteilung: **29.07.2020**
(21) Anmeldenummer: 17739906.0
(22) Anmeldetag: 29.06.2017
(51) Int. Cl.: B01D 3/00, B01D 53/18, C08J 5/04, F28F 25/04

(54) **FLÜSSIGKEITSVERTEILER IN KOLONNEN**
LIQUID DISTRIBUTOR IN COLUMNS
RÉPARTITEUR DE LIQUIDE EN COLONNES

(30) Priorität: 30.06.2016 DE 102016211808
(43) Veröffentlichungstag der Anmeldung: 08.05.2019
(73) Patentinhaber: SGL Carbon SE, 65201 Wiesbaden (DE); Sulzer Management AG, 8401 Winterthur (CH)
(72) Erfinder: SPULLER, Ralph, 86405 Meitingen (DE); SCHULER, Carla, 8492 Wila (CH); HALBMEIR, Andreas, 86405 Meitingen (DE); KUCHER, Martin, 86405 Meitlingen (DE)
(86) Internationale Anmeldenummer: PCT/EP2017/066193
(87) Internationale Veröffentlichungsnummer: WO 2018/002255

(56) Entgegenhaltungen:
- DE-A1- 19 519 241
- DE-U1-202010 015 436
- US-A- 3 795 388
- US-A- 4 543 218
- US-A- 4 994 210
- US-A- 5 180 528
- US-A1- 2007 194 471

## Beschreibung

Die vorliegende Erfindung betrifft einen Flüssigkeitsverteiler als Kolonneneinbau wie er in der industriellen Verfahrenstechnik Anwendung finden kann, sowie ein Verfahren zur Herstellung des Flüssigkeitsverteilers.

Eine Kolonne ist ein verfahrenstechnischer Apparat in der Form einer hohlen, schlanken Säule mit diversen, je nach Einsatzzweck unterschiedlichen Einbauten. In der Regel dient eine Kolonne dazu, Stoffgemische durch diverse thermische Verfahren zu trennen. Hierzu werden physikalische Eigenschaften und Gleichgewichtszustände zwischen unterschiedlichen Phasen genutzt. Typische Einbauten in Kolonnen sind Flüssigkeitssammler, Flüssigkeitsverteiler, Füllkörper oder unstrukturierte Packungen, strukturierte Packungen sowie Böden oder Tragroste für die Packungen.

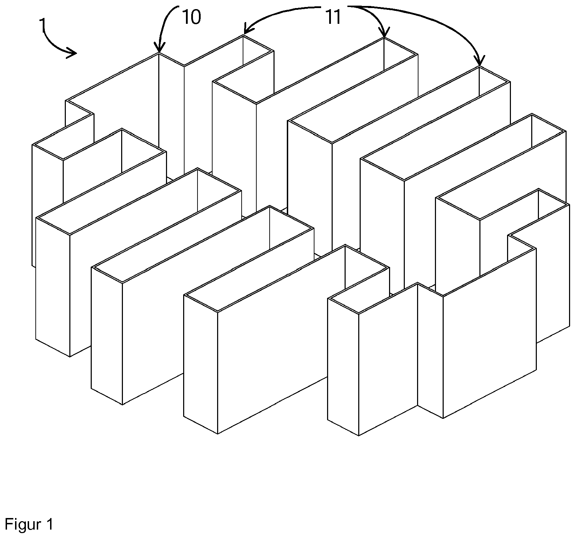

Der Flüssigkeitsverteiler dient in der Regel dazu, eine Flüssigkeit, die meist über einen Flüssigkeitssammler oder ein Aufgaberohr in den Flüssigkeitsverteiler eingeleitet wird, über den horizontalen Querschnitt der Kolonne definiert zu verteilen und nach unten abzugeben. Typische Flüssigkeitsverteiler sind Rohrverteiler und Kastenrinnenverteiler. Figur 1 zeigt eine schematische Darstellung eines typischen Kastenrinnenverteilers. Sie umfassen meist einen Hauptkanal, der die Flüssigkeit in entsprechende Nebenkanäle leitet, von wo aus sie nach unten, beispielsweise über Öffnungen im Boden der Kastenrinnen, abgegeben wird.

Kastenrinnenverteiler werden typischerweise aus einstückigen U-Profilen aus Metallen oder Kunststoffen gefertigt. Bei besonderen Materialanforderungen, beispielsweise wegen sehr korrosiven Flüssigkeiten, kommen auch einteilige Profile aus Graphit oder Keramik zum Einsatz (EP 0471050 A1). Bei Metallen werden entweder entsprechende Bleche gebogen oder miteinander verschweißt. Kunststoffprofile werden üblicherweise extrudiert. Auch keramische Kastenrinnenverteiler können durch Extrusion eines keramischen Vorläufermaterials und anschließender thermischer Umwandlung in die entsprechende Keramik hergestellt werden. Kastenrinnenverteiler aus Graphit werden gemäß der EP 0471050 A1 aus einem Block gefräst, was einen hohen Materialverbrauch darstellt.

Sämtliche bekannten Herstellungsweisen sind aufwendig und teuer, da sie alle auf möglichst einstückige Bauteile abzielen. Einstückig bedeutet im Rahmen der vorliegenden Erfindung, wie es beispielsweise beim Verschweißen der Fall ist, monolithisch, sozusagen "aus einem Guss". Die Aufgabe der vorliegenden Erfindung ist es daher, einen Flüssigkeitsverteiler bereitzustellen, der einfach und kostengünstig herzustellen ist und dabei hinsichtlich der Anforderungen wie Tragfähigkeit, Stabilität, Materialbeständigkeit und Performance den bekannten Flüssigkeitsverteilern in nichts nachsteht.

Zur Lösung der Aufgabe wurde im Rahmen der vorliegenden Erfindung gefunden, dass sich Flüssigkeitsverteiler aus Platten aus Faserverbundwerkstoffen mittels eines Steckbaukastensystems leicht zusammenbauen lassen und dass die so erhaltenen Flüssigkeitsverteiler für die vorgesehene Verwendung in der industriellen Verfahrenstechnik als Kolonneneinbauten eine mehr als ausreichende Tragfähigkeit, Stabilität, Materialbeständigkeit und Performance bieten.

Die vorliegende Erfindung betrifft daher einen Flüssigkeitsverteiler als Kolonneneinbau für eine definierte Verteilung von einer innerhalb einer Kolonne nach unten fließenden Flüssigkeit, umfassend mindestens einen Boden und Seitenwände, die ein Behältnis zur Aufnahme und definierten Verteilung der Flüssigkeit darstellen, wobei der Boden und mindestens eine der Seitenwände aus zumindest formschlüssig, miteinander verbundenen Platten aufgebaut sind, und wobei die Platte, beziehungsweise die Platten, der mindestens einen Seitenwand einen Faserverbundwerkstoff umfasst, beziehungsweise umfassen.

Figur 1: Schematische Darstellung eines typischen Kastenrinnenverteilers.

Figur 2: Zwei perspektivische Ansichten (Innen- und Außenseite) einer teilweise aufgebauten Kastenrinne gemäß einer bevorzugten Ausführungsform der vorliegenden Erfindung.

Figur 1 stellt schematisch einen Flüssigkeitsverteiler (1) dar, wobei der Flüssigkeitsverteiler einen Hauptkanal (10) und Nebenkanäle (11) aufweist. Hierbei handelt es sich um einen Kastenrinnenverteiler.

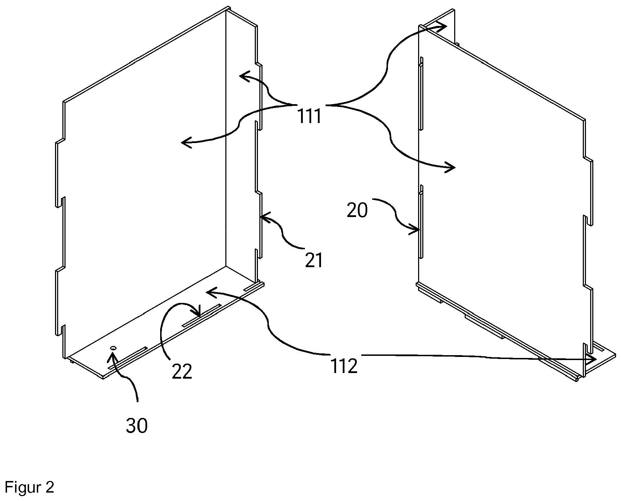

In Figur 2 werden teilweise aufgebaute Kastenrinnen dargestellt, wobei beim zusammenstecken der beiden teilweise aufgebauten Kastenrinnen die Zapfen (21) in Die Schlitze (22) eingreifen, wobei durch seitliche Verschiebung der Platte mit dem Schlitz mittels einer Hinterschneidung am Zapfen (21) gesichert wird. Hierbei handelt es sich um eine integrierte Sicherung. Durch den Boden (112) und die Seitenwände (111) wird das Behältnis (10,11) gebildet. Im Boden (112) befindet sich eine Öffnung 30, wodurch die Flüssigkeitsabgabe nach unten erfolgt.

Die Art des erfindungsgemäßen Flüssigkeitsverteilers (1) ist nicht besonders eingeschränkt. Möglich sind sämtliche bekannten Bauweisen von Flüssigkeitsverteilern (1), insbesondere Kastenrinnenverteiler, Grundlochverteiler, Seitenlochverteiler, ein- oder mehrstufige Verteiler, mit oder ohne Hauptkanal (10), mit integriertem (10) oder aufgesetztem Hauptkanal (Vorverteilerkasten), mit oder ohne Sammelsystem. Unter einem Sammelsystem ist beispielsweise ein in der Fachwelt bekannter Flüssigkeitssammler zu verstehen, der in der Kolonne oberhalb des Verteilers (1) angebracht ist.

Im Rahmen der vorliegenden Erfindung wird unter einer Platte (111, 112) ein ebenes, flächiges Bauteil verstanden, das aus steifem Material besteht. Der Boden (112), beziehungsweise eine Seitenwand (111) eines jeweiligen Behältnisses (10, 11) kann aus einer, aber auch aus mehreren Platten bestehen, beziehungsweise aufgebaut sein. Soweit es jedoch, je nach gewünschter Dimensionierung des Flüssigkeitsverteilers (1), praktikabel ist, ist es bevorzugt, dass der Boden (112) und die Seitenwände (111) jeweils aus einer einzigen Platte (111, 112) bestehen, beziehungsweise aus dieser aufgebaut sind. Die Plattenstärke oder Dicke ist nicht besonders eingeschränkt. Sie wird je nach Auslegung und Dimensionierung des erfindungsgemäßen Flüssigkeitsverteilers (1) gewählt, wobei selbstverständlich die Tragfähigkeit sichergestellt werden muss. Auch die Dimensionierung des erfindungsgemäßen Flüssigkeitsverteilers (1) ist nicht besonders eingeschränkt. Der erfindungsgemäße Flüssigkeitsverteiler (1) hat typischerweise einen Durchmesser im Bereich von 100 mm bis zu mehreren Metern, beispielsweise 3 m.

Unter einer definierten Verteilung ist im Rahmen der vorliegenden Erfindung zu verstehen, dass die Menge und die Position der Flüssigkeitsabgabe nach unten je nach Anforderung genau eingestellt werden kann. Dies geschieht typischerweise über die Vorsehung von exakt platzierten und dimensionierten Öffnungen (30) in den Böden (112) oder einer Seitenwand (111) der Behältnisse (10, 11).

Der Begriff "Behältnis" stellt im Rahmen der vorliegenden Erfindung den Oberbegriff für beispielsweise eine Kastenrinne (10, 11) dar. Je nach Terminologie des betreffenden Flüssigkeitsverteilers (1), können auch Hauptkanal (10) und Nebenkanäle (11) als Behältnisse (10, 11) bezeichnet werden. Der erfindungsgemäße Flüssigkeitsverteiler (1) besteht bevorzugt aus mehreren der erfindungsgemäßen Behältnisse (10, 11). Neben den Platten sind auch die Behältnisse (10, 11) miteinander verbunden, üblicherweise über einen zentralen Hauptkanal (10).

Erfindungsgemäß sind die miteinander verbundenen Platten zumindest formschlüssig miteinander verbunden. Die Platten, welche miteinander verbunden sind, können grundsätzlich in jedem beliebigen Winkel zueinander stehen. Typischerweise und bevorzugt stehen zwei miteinander verbundene Platten, die jeweils unterschiedliche Bestandteile des Behältnisses (10, 11) darstellen (zum Beispiel eine Platte stellt den Boden (112) dar und die andere Platte eine Seitenwand (111)), in einem rechten Winkel zueinander.

Gemäß einer besonders bevorzugten Ausführungsform sind die zumindest formschlüssig miteinander verbundenen Platten mittels einer Steckverbindung (20) ineinander gesteckt und gesichert. Die Art der Steckverbindung (20) ist nicht besonders eingeschränkt. Möglich sind insbesondere puzzleartige Verbindungen, Verzapfen, Clipverbindungen, einrastende und verrastende Verbindungen und Nut- und Federverbindung. In Figur 2 ist eine mögliche Variante einer Zapfenverbindung dargestellt, in der Zapfen (21) in Schlitze (22) eingreifen und durch seitliche Verschiebung die Platte mit dem Schlitz mittels einer Hinterschneidung am Zapfen (21) gesichert wird. Auch möglich, jedoch weniger bevorzugt sind beispielsweise Verschraubungen, da diese aufwendiger und damit teuer sind.

Bevorzugt weist die Steckverbindung (20) mindestens ein Sicherungselement zur Sicherung der Steckverbindung (20) auf. Die Art des Sicherungselements ist dabei nicht besonders eingeschränkt. Bevorzugte Sicherungselemente sind Clips, die, weiter bevorzugt, aus dem gleichen Material wie die Platten bestehen. Sie sind in der Regel flach ausgebildet und weisen einrastende, einen Formschluss ausbildende Elemente auf. Ein Beispiel für einen bevorzugten Clip ist in dem deutschen Gebrauchsmuster DE 20 2010 015 436 U1 beschrieben.
Die Sicherungselemente können sowohl in die Bauteile integriert sein (wie beispielsweise Zapfenverbindung in Figur 2) als auch separate Elemente sein.

Gemäß einer bevorzugten Ausführungsform des erfindungsgemäßen Flüssigkeitsverteilers (1) umfasst der Faserverbundwerkstoff mindestens ein textiles Flächengebilde, wobei mindestens eines davon ein unidirektionales Gelege ist. Der Vorteil hierbei ist, dass die Stabilität und Steifigkeit gezielt dort eingebracht werden kann, wo sie benötigt wird. Da sich der Flüssigkeitsverteiler (1) im Gebrauch üblicherweise nicht bewegen muss, ist er überwiegend statischen, in der Richtung konstanten Kräften ausgesetzt. Durch die gezielte Auslegung mit unidirektionalen Gelegeverstärkungen, kann das Gesamtgewicht des Flüssigkeitsverteilers (1) effizient genutzt und damit reduziert werden.

Ebenfalls bevorzugt enthält der Faserverbundwerkstoff Carbonfasern. Diese haben nicht nur Vorteile in ihrer Stabilität, wie Zugfestigkeit und Steifigkeit, sondern auch in ihrer chemischer Beständigkeit.

Gemäß einer bevorzugten Ausführungsform des erfindungsgemäßen Flüssigkeitsverteilers (1) weist der Faserverbundwerkstoff eine Matrix auf, welche ausgewählt ist aus der Gruppe bestehend aus Kunststoffmatrix und Kohlenstoffmatrix. Grundsätzlich bevorzugt, weil weniger energieintensiv herzustellen, ist eine Kunststoffmatrix. Hinsichtlich der meist erforderlichen chemischen Beständigkeit ist jedoch eine Kohlenstoffmatrix bevorzugt. Am meisten bevorzugt sind carbonfaserverstärkte Kunststoffe (CFK) oder carbonfaserverstärkter Kohlenstoff (CFC). Die genaue Beschaffenheit dieser Materialien ist im Rahmen der vorliegenden Erfindung nicht eingeschränkt. Herstellungsweisen dieser Materialien sind ebenfalls bekannt und damit nicht Gegenstand der vorliegenden Erfindung. Grundsätzlich kann jedes dieser Materialien, wie auch immer hergestellt, in dem erfindungsgemäßen Flüssigkeitsverteiler (1) zum Einsatz kommen.

Gemäß einer bevorzugten Ausführungsform des erfindungsgemäßen Flüssigkeitsverteilers (1) weisen die mittels einer Steckverbindung (20) zumindest formschlüssig miteinander verbundenen Platten eine Restporosität auf, sind also nicht flüssigkeits- oder gasdicht. Gerade für die bestimmungsgemäße Verwendung eines Flüssigkeitsverteilers (1), würde man vermuten, dass nicht flüssigkeitsdichte Platten für den vorgesehenen Einsatz ungeeignet sind. Im Rahmen der vorliegenden Erfindung wurde jedoch gefunden, dass die Restporosität für diese Anwendung vernachlässigt werden kann. Es ist natürlich möglich, die Platten mittels Einbringen eines Imprägnierharzes flüssigkeitsdicht abzudichten. Bevorzugt, weil nicht zwingend erforderlich, ist es jedoch, auf den Prozessschritt der Imprägnierung zu verzichten.

Gemäß einer besonders bevorzugten Ausführungsform des erfindungsgemäßen Flüssigkeitsverteilers (1) umfasst der Flüssigkeitsverteiler (1) mindestens zwei der Behältnisse (10, 11), wobei die Böden (112) und sämtliche Seitenwände (111) der Behältnisse (10, 11) aus Platten aufgebaut sind, welche aus carbonfaserverstärktem Kohlenstoff (CFC) bestehen, und wobei mindestens zwei der Platten eines Behältnisses (10, 11) zumindest formschlüssig miteinander verbunden sind. Auch bei dieser besonders bevorzugten Ausführungsform ist der Einsatz nicht flüssigkeitsdichter Platten für die geforderte Performance vollkommen ausreichend.

Ein weiterer Aspekt der vorliegenden Erfindung stellt ein Verfahren zur Herstellung eines Flüssigkeitsverteilers (1) als Kolonneneinbau für eine definierte Verteilung von einer innerhalb einer Kolonne nach unten fließenden Flüssigkeit dar, welches die folgenden Schritte umfasst:
- Bereitstellen von Platten aus carbonfaserverstärktem Verbundwerkstoff und
- formschlüssiges Verbinden und Sichern der Platten, so dass die Platten ein Behältnis (10, 11) mit einem Boden (112) und Seitenwänden (111) definieren, welches als Bestandteil des Flüssigkeitsverteilers (1) für die definierte Verteilung der Flüssigkeit vorgesehen ist.

Ein weiterer Aspekt der vorliegenden Erfindung ist eine Kolonne, welche mindestens einen erfindungsgemäßen Flüssigkeitsverteiler umfasst, wobei die Kolonne zum Trennen von Stoffgemischen geeignet ist.

Ein weiterer Aspekt ist ein Verfahren zum Trennen von Stoffgemischen in einer Kolonne, wobei die Kolonne mindestens einen Flüssigkeitsverteiler umfasst.

Die in der vorliegenden Erfindung beschriebenen bevorzugten Ausführungsformen des erfindungsgemäßen Flüssigkeitsverteilers (1) können in entsprechender Weise mit dem erfindungsgemäßen Verfahren kombiniert werden. Es wird daher auf umfangreiche Wiederholungen verzichtet.

Nachfolgend wird die vorliegende Erfindung anhand eines Ausführungsbeispiels erläutert, wobei das Ausführungsbeispiel keine Einschränkung der Erfindung darstellen.
1) Herstellung des benötigten CFC und/oder CFK-Plattenmaterials für Böden (112) und Seitenwände (111) des Verteilers (CFC/CFK-Platten sind kommerziell bei der SGL Carbon GmbH unter dem Namen Sigrabond® erhältlich)
2) Wasserstrahlschneiden der Einzelteile (u.a. Bodenplatten (112), Seitenwände (111), Sicherungen) in die gewünschte Größe mit Schlitzen und Nasen
3) Der Aufbau des 1. Verteilerkanals erfolgt nach folgendem Prinzip:
   a) Zusammenstecken der 4 Seitenwände (111) zu einem nach oben und unten offenen Rechteck über die hierfür vorgesehenen Schlitze und Nasen
   b) Einschieben der Bodenplatte (112) in die dafür vorgesehenen Nasen der Seitenwände (111)
   c) Sichern der Steckverbindungen (durch beispielsweise Clipverbindungen (separate Sicherungselemente), oder Einrasten (integrierte Sicherungselemente)
4) Die weiteren Verteilerkanäle werde analog zu Punkt 5 aufgebaut.
5) Verbinden der einzelnen zusammengesteckten Verteilerkanäle über CFC und oder CFK-Verbindungsteile zu einem Gesamtverteiler
6) Sicherung der Verbindungsteile (u.a. Clip, Einrasten, ...)

### Bezugszeichenliste

- 1: Flüssigkeitsverteiler
- 10, 11: Behältnis
- 20: Steckverbindung
- 21: Zapfen
- 22: Schlitze
- 30: dimensionierte Öffnungen in den Böden
- 111: Seitenwände
- 112: Boden

## Patentansprüche

1. Flüssigkeitsverteiler (1) als Kolonneneinbau für eine definierte Verteilung von einer innerhalb einer Kolonne nach unten fließenden Flüssigkeit, umfassend mindestens einen Boden (112) und Seitenwände (111), die ein Behältnis (10, 11) zur Aufnahme und definierten Verteilung der Flüssigkeit darstellen, **dadurch gekennzeichnet, dass** der Boden (112) und mindestens eine der Seitenwände (111) aus zumindest formschlüssig miteinander verbundenen Platten aufgebaut sind, und wobei die Platte, beziehungsweise die Platten, der mindestens einen Seitenwand (111) einen Faserverbundwerkstoff umfasst, beziehungsweise umfassen.

2. Flüssigkeitsverteiler (1) nach Anspruch 1, **dadurch gekennzeichnet, dass** die zumindest formschlüssig miteinander verbundenen Platten mittels einer Steckverbindung (20) ineinander gesteckt sind.

3. Flüssigkeitsverteiler (1) nach Anspruch 2, **dadurch gekennzeichnet, dass** die Steckverbindung (20) mindestens ein Sicherungselement zur Sicherung der Steckverbindung (20) aufweist.

4. Flüssigkeitsverteiler (1) nach Anspruch 1, **dadurch gekennzeichnet, dass** der Faserverbundwerkstoff mindestens ein textiles Flächengebilde umfasst, wobei mindestens eines der textilen Flächengebilde ein unidirektionales Gelege ist.

5. Flüssigkeitsverteiler (1) nach Anspruch 1, **dadurch gekennzeichnet, dass** der Faserverbundwerkstoff Carbonfasern umfasst.

6. Flüssigkeitsverteiler (1) nach Anspruch 1, **dadurch gekennzeichnet, dass** der Faserverbundwerkstoff eine Matrix aufweist, welche ausgewählt ist aus der Gruppe bestehend aus Kunststoffmatrix und Kohlenstoffmatrix.

7. Flüssigkeitsverteiler (1) nach Anspruch 1, **dadurch gekennzeichnet, dass** der Flüssigkeitsverteiler (1) mindestens zwei der Behältnisse (10, 11) umfasst, wobei die Böden (112) und sämtliche Seitenwände (111) der Behältnisse (10, 11) aus Platten aufgebaut sind, welche aus carbonfaserverstärktem Kohlenstoff bestehen, und wobei mindestens zwei der Platten eines Behältnisses (10, 11) zumindest formschlüssig miteinander verbunden sind.

8. Verwendung des Flüssigkeitsverteilers (1) nach einem der Ansprüche 1-7 zur definierten Verteilung von einer innerhalb einer Kolonne nach unten fließenden Flüssigkeit.

9. Kolonne, welche für die Trennung von Stoffgemischen geeignet ist, umfassend mindestens einem Flüssigkeitsverteiler nach einem der Ansprüche 1-7.

10. Verfahren zum Trennen von Stoffgemischen in einer Kolonne, umfassend mindestens einen Flüssigkeitsverteiler nach einem der Ansprüche 1-7.

## Claims

1. Liquid distributor (1) as a column installation for a defined distribution of a liquid flowing downwards within a column, comprising at least one bottom (112) and lateral walls (111) which form a container (10, 11) for the receiving and defined distribution of the liquid, **characterised in that** the bottom (112) and at least one of the lateral walls (111) are constructed from at least form-fittingly interconnected plates, and the plate, or the plates, of the at least one lateral wall (111) comprising a fibre composite material.

2. Liquid distributor (1) according to claim 1, **characterised in that** the at least form-fittingly interconnected plates are inserted into one another by means of a plug-in connection (20).

3. Liquid distributor (1) according to claim 2, **characterised in that** the plug-in connection (20) has at least one securing element for securing the plug-in connection (20).

4. Liquid distributor (1) according to claim 1, **characterised in that** the fibre composite material comprises at least one textile fabric, at least one of the textile fabrics being a unidirectional laid scrim.

5. Liquid distributor (1) according to claim 1, **characterised in that** the fibre composite material comprises carbon fibres.

6. Liquid distributor (1) according to claim 1, **characterised in that** the fibre composite material has a matrix which is selected from the group consisting of plastics matrix and carbon matrix.

7. Liquid distributor (1) according to claim 1, **characterised in that** the liquid distributor (1) comprises at least two of the containers (10, 11), the bottoms (112) and all the lateral walls (111) of the containers (10, 11) being constructed from plates which consist of carbon-fibre reinforced carbon, and at least two of the plates of a container (10, 11) being at least form-fittingly interconnected.

8. Use of the liquid distributor (1) according to any of claims 1-7 for the defined distribution of a liquid flowing downwards within a column.

9. Column which is suitable for separating mixtures of substances, comprising at least one liquid distributor according to any of claims 1-7.

10. Method for separating mixtures of substances in a column, comprising at least one liquid distributor according to any of claims 1-7.

## Revendications

1. Répartiteur de liquide (1) sous forme d'insert en colonnes pour une répartition définie d'un liquide s'écoulant vers le bas à l'intérieur d'une colonne, comprenant au moins un fond (112) et des parois latérales (111) qui représentent un contenant (10, 11) destiné à la réception et à la répartition définie du liquide, **caractérisé en ce que** le fond (112) et au moins l'une des parois latérales (111) sont construits de plaques reliées au moins par liaison de forme, et dans lequel la plaque ou les plaques de l'au moins une paroi latérale (111) comprend ou comprennent un matériau composite fibreux.

2. Répartiteur de liquide (1) selon la revendication 1, **caractérisé en ce que** les plaques, reliées au moins par liaison de forme, sont insérées les unes dans les autres au moyen d'une liaison enfichable (20).

3. Répartiteur de liquide (1) selon la revendication 2, **caractérisé en ce que** la liaison enfichable (20) présente au moins un élément de fixation pour la fixation de ladite liaison enfichable (20).

4. Répartiteur de liquide (1) selon la revendication 1, **caractérisé en ce que** le matériau composite fibreux comprend au moins un tissu textile, dans lequel au moins l'un des tissus textiles est un mat unidirectionnel.

5. Répartiteur de liquide (1) selon la revendication 1, **caractérisé en ce que** le matériau composite fibreux comprend des fibres de carbone.

6. Répartiteur de liquide (1) selon la revendication 1, **caractérisé en ce que** le matériau composite fibreux comporte une matrice choisie dans le groupe constitué de la matrice plastique et de la matrice de carbone.

7. Répartiteur de liquide (1) selon la revendication 1, **caractérisé en ce que** le répartiteur de liquide (1) comprend au moins deux des contenants (10, 11), dans lequel les fonds (112) et toutes les parois latérales (111) des contenants (10, 11) sont construits à partir des plaques qui sont constituées de carbone renforcé par des fibres de carbone, et dans lequel au moins deux des plaques d'un contenant (10, 11) sont reliées au moins par liaison de forme.

8. Utilisation du répartiteur de liquide (1) selon l'une des revendications 1 à 7 pour la répartition définie d'un liquide s'écoulant vers le bas à l'intérieur d'une colonne.

9. Colonne appropriée pour la séparation de mélanges de substances, comprenant au moins un répartiteur de liquide selon l'une des revendications 1 à 7.

10. Procédé de séparation de mélanges de substances dans une colonne, comprenant au moins un répartiteur de liquide selon l'une des revendications 1 à 7.
